# EUROPEAN PATENT APPLICATION

(11) **EP 4 340 069 A1**
(43) Date of publication of application: **20.03.2024**
(21) Application number: 22806608.0
(22) Date of filing: 06.05.2022
(51) Int. Cl.: H01M 4/58, H01M 4/62, H01M 10/0525

(54) **LITHIUM IRON PHOSPHATE POSITIVE ELECTRODE MATERIAL, PREPARATION METHOD THEREFOR, AND LITHIUM ION BATTERY**

(30) Priority: 10.05.2021 CN 202110506894
(71) Applicant: BYD Company Limited, Shenzhen, Guangdong 518118 (CN)
(72) Inventor: XU, Yunling, Shenzhen, Guangdong 518118 (CN); XU, Chaqing, Shenzhen, Guangdong 518118 (CN); CHEN, Junyue, Shenzhen, Guangdong 518118 (CN); CAO, Wenyu, Shenzhen, Guangdong 518118 (CN)
(74) Representative: Arnold & Siedsma
(86) International application number: PCT/CN2022/091178
(87) International publication number: WO 2022/237642

(57) **Abstract**

A lithium iron phosphate positive electrode material, a preparation method thereof, and a lithium ion battery are disclosed. The lithium iron phosphate positive electrode material has an expression formula of LiFe₁₋ₓMₓPO₄/C, in which, 0<x≤0.05; and M is at least one element selected from Mg, Al, Zr, Ti, Co, V, Mn, W, Sn, Nb and Mo. The lithium iron phosphate positive electrode material has a particle size distribution meeting (D90-D10) / D50=1-2.17; and the magnetic material content in the lithium iron phosphate positive electrode material is 850-900 ppm (w/w).

## Description

### CROSS-REFERENCE TO RELATED APPLICATIONS

The present disclosure claims priority of Chinese Patent Application No. 202110506894.1 filed with National Intellectual Property Administration, PRC on May 10, 2021 and entitled "Lithium iron phosphate positive electrode material, preparation method thereof, and lithium ion battery", the disclosure of which is incorporated herein by reference in its entirety.

### FIELD

The present disclosure relates to the field of positive electrode material, and specifically to a lithium iron phosphate positive electrode material and a preparation method thereof, and a lithium ion battery.

### BACKGROUND

Lithium iron phosphate positive electrode material and ternary positive electrode materials (NCM and NCA) are two kinds of positive electrode materials mainly used in lithium ion batteries at present. Based on their respective characteristics, they have obviously different application areas. Lithium iron phosphate positive electrode material has good safety and long cycle life during use, and is thus widely used in large vehicles. Ternary positive electrode materials have high energy density, and are thus widely used in passenger vehicles.

Lithium iron phosphate has an orthorhombic olivine structure, having very small volume change (6.8%) during the charging and discharging process due to the intercalation and deincaterlation of lithium, and thus having quite excellent cycle performance. However, the poor electronic and ionic conductivity of lithium iron phosphate results in poor low-temperature and rate performance, making it difficult to meet the requirements for low-temperature and rate performances of power batteries. In order to address the challenges posed by the inadequate low-temperature and rate performances of lithium iron phosphate positive electrode material, many improvements have been carried out, and certain advancements being achieved at present. However, the low-temperature and rate performances of lithium iron phosphate positive electrode material are still less desirable compared with ternary cathode materials. Moreover, the iron impurities introduced in the production process lead to a high magnetic material content in the lithium iron phosphate positive electrode material, such that the battery suffers from serious self-discharge and even has safety problems. This is also a key problem that needs to be solved urgently.

Lithium iron phosphate is mainly prepared by solid-phase method and hydrothermal synthesis ("wet method"). The solid-phase method includes uniformly mixing a lithium salt, a phosphorous source, an iron source and a carbon source by mechanical mixing, spraying, sintering, and jet milling to obtain a lithium iron phosphate positive electrode material. This method is used by most positive electrode manufacturers due to sophisticated technology, low cost, high capacity of the prepared lithium iron phosphate, and high compaction density. However, lithium iron phosphate synthesized by the solid-phase method has the problems of poor low-temperature and rate performances due to large particle size. Compared with the solid-phase method, lithium iron phosphate synthesized by wet synthesis has small size, and great advantages in low-temperature and rate performances. However, there are many impurity phases in lithium iron phosphate synthesized by wet synthesis, many influencing factors exist in the synthesis process, the consistency is poor, and the capacity is low. Due to the presence of the impurity phases, the magnetic material content is high, and the high-temperature and cycle performances are poor. Compared with the solid-phase method, although lithium iron phosphate prepared by wet synthesis has small particle size, the particle size of primary particles is mostly 160 nm or higher, and the agglomeration is serious. Although the low-temperature and rate performances are improved compared with the solid-state method, they still cannot meet the requirements for power batteries.

### SUMMARY

To overcome the problems of poor low-temperature performance, poor rate performance and high magnetic material content associated with lithium iron phosphate positive electrode material existing in related art, an object of the present disclosure provides a lithium iron phosphate positive electrode material, a preparation method thereof, and a lithium ion battery.

To achieve the above object, in a first aspect, the present disclosure provides a lithium iron phosphate positive electrode material. The lithium iron phosphate positive electrode material has an expression formula of LiFe₁₋ₓMₓPO₄/C, in which, 0<x≤0.05; and M is at least one element selected from Mg, Al, Zr, Ti, Co, V, Mn, W, Sn, Nb and Mo.

The lithium iron phosphate positive electrode material has a particle size distribution meeting (D90-D10) / D50=1-2.17. The magnetic material content in the lithium iron phosphate positive electrode material is 850 ppm-900 ppm (w/w).

In a second aspect, the present disclosure provides a method for preparing a lithium iron phosphate positive electrode material. The method includes:
(1) A lithium salt, a phosphoric acid and an iron salt are uniformly mixed and then performed hydrothermal reaction in the presence of a solvent under an inert atmosphere, to obtain a first slurry;
(2) The first slurry is washed, to obtain a second slurry;
(3) The first slurry is added to the second slurry, and performed sand milling under an inert atmosphere, to obtain a third slurry;
(4) The third slurry is uniformly mixed with a lithium supplement, and performed spray drying to obtain a precursor; and
(5) The precursor is sintered and then performed jet milling to obtain the lithium iron phosphate positive electrode material.

In a third aspect, the present disclosure provides a lithium iron phosphate positive electrode material prepared by the method as described above.

In a fourth aspect, the present disclosure provides a lithium ion battery, containing the lithium iron phosphate positive electrode material as described above.

By means of the above technical solutions, the present disclosure has the following advantages.
(1) The lithium iron phosphate positive electrode material according to the present disclosure has few impurity phase, small particle size of primary particle, good dispersity, and narrow particle size distribution range, and can advantageously improve the low-temperature performance and rate performance of a lithium ion battery, when used as a positive electrode material in the lithium ion battery.
(2) The lithium iron phosphate positive electrode material according to the present disclosure has low magnetic material content, and can advantageously reduce the self-discharge of the lithium ion battery and improve the high-temperature storage performance and cycle performance of the lithium ion battery, when used as a positive electrode material in the lithium ion battery.
(3) In the method for preparing a lithium iron phosphate positive electrode material according to the present disclosure, by the synergism of a dispersant, a grain growth inhibitor and sand milling, particles of small size formed during the sand milling process are ensured not to be susceptible to agglomeration, and the agglomerative growth in the subsequent sintering process is prevented, to avoid the formation of molten large particles. Moreover, bulk phase doping of the grain growth inhibitor improves the electron conductivity and ion conductivity, which is beneficial to the improvement of the rate performance. By adding a lithium supplement, the impurity phase and the magnetic material content are effectively reduced in the lithium iron phosphate positive electrode material, which reduces self-discharge performance, and improves the high-temperature storage performance and the cycle performance of the lithium iron phosphate positive electrode material.

Additional aspects and advantages of the present disclosure will be partly given in the following description, some of which will become apparent from the following description, or may be learned from practices of the present disclosure.

### BRIEF DESCRIPTION OF THE DRAWINGS

The accompanying drawings illustrated here are intended to provide further understanding of the present disclosure and constitute a part of present disclosure. The schematic embodiments and description thereof in the present disclosure are provided for explaining the present disclosure, and do not constitute a restriction on the present disclosure. In the accompanying drawings:
FIG. 1 shows a scanning electron microscopy (SEM) image of a lithium iron phosphate positive electrode material obtained in Embodiment 1 of the present disclosure, at a magnification of 100k;
FIG. 2 shows an SEM image of a lithium iron phosphate positive electrode material obtained in Embodiment 2 of the present disclosure, at a magnification of 100k;
FIG. 3 shows an SEM image of a lithium iron phosphate positive electrode material obtained in Embodiment 3 of the present disclosure, at a magnification of 100k; and
FIG. 4 shows an SEM image of a lithium iron phosphate positive electrode material obtained in Comparative Embodiment 1 of the present disclosure, at a magnification of 100k.

### DETAILED DESCRIPTION

The endpoints and any values of the ranges disclosed herein are not limited to the precise range or value, and these ranges or values should be understood to include values close to these ranges or values. For numerical ranges, one or more new ranges of values can be obtained by combining the endpoint values of each range, combining the endpoint values of each range with individual point values, and combining the individual point values. These numerical ranges should be regarded as being specifically disclosed herein

In a first aspect, the present disclosure provides a lithium iron phosphate positive electrode material. The lithium iron phosphate positive electrode material has an expression formula of LiFe₁₋ₓMₓPO₄/C, in which, 0<x≤0.05; and M is at least one element selected from Mg, Al, Zr, Ti, Co, V, Mn, W, Sn, Nb and Mo.

The lithium iron phosphate positive electrode material has a particle size distribution meeting (D90-D10) / D50=1-2.17. A magnetic material content in the lithium iron phosphate positive electrode material is 850 ppm-900 ppm (w/w). The lithium iron phosphate positive electrode material has small particle size, good dispersity, and narrow particle size distribution range. Notably, in the present disclosure, the lithium iron phosphate positive electrode material having an expression formula of LiFe₁₋ₓMₓPO₄/C can be understood as the lithium iron phosphate positive electrode material having a structure of C coated LiFe₁₋ₓMₓPO₄.

In some embodiments of the present disclosure, based on the total weight of the lithium iron phosphate positive electrode material, the carbon content in the lithium iron phosphate positive electrode material is 1 wt%-3.5 wt%. In some other embodiments of the present disclosure, based on the total weight of the lithium iron phosphate positive electrode material, the carbon content in the lithium iron phosphate positive electrode material is 1.4 wt%-3.2 wt%.

In some embodiments of the present disclosure, the lithium iron phosphate positive electrode material has a particle size distribution meeting (D90-D10) / D50=1-2.17. In some other embodiments of the present disclosure, the lithium iron phosphate positive electrode material has a particle size distribution meeting (D90-D10) / D50=1-1.55. The lithium iron phosphate positive electrode material has few impurity phases, small particle size of primary particles, good dispersity, and narrow particle size distribution range, and can advantageously improve the low-temperature performance and rate performance of a lithium ion battery, when used as a positive electrode material in the lithium ion battery.

In some embodiments of the present disclosure, the magnetic material content in the lithium iron phosphate positive electrode material is 850 ppm-900 ppm (w/w). In some other embodiments of the present disclosure, the magnetic material content in the lithium iron phosphate positive electrode material is 850 ppm-885 ppm (w/w). The lithium iron phosphate positive electrode material has low magnetic material content, and can advantageously reduce the self-discharge of a lithium ion battery and improve the high-temperature storage performance and cycle performance of the lithium ion battery, when used as a positive electrode material in the lithium ion battery. The magnetic material content involved in the present disclosure is tested by JSII-G1 magnetic material analyzer.

In some embodiments of the present disclosure, M is at least one element selected from Mg, Al, Zr, Ti, Co, V, Mn, W, Sn, Nb and Mo. In some other embodiments of the present disclosure, M is at least one element selected from Ti, V and Nb.

In a second aspect, the present disclosure provides a method for preparing a lithium iron phosphate positive electrode material. The method includes:
(1) A lithium salt, a phosphoric acid and an iron salt are uniformly mixed and then performed hydrothermal reaction in the presence of a solvent under an inert atmosphere, to obtain a first slurry;
(2) The first slurry is washed to obtain a second slurry;
(3) The first slurry is added to the second slurry and performed sand milling under an inert atmosphere, to obtain a third slurry;
(4) The third slurry is uniformly mixed with a lithium supplement, and performed spray drying to obtain a precursor; and
(5) The precursor is sintered and then performed jet milling to obtain the lithium iron phosphate positive electrode material.

Although the rate performance of lithium iron phosphate positive electrode material can be improved to some extent by in-situ carbon coating and metal doping in related art, it is difficult to form effective in-situ coating and ion doping in the process of wet synthesis. The reason for this is that, 1. If a carbon source is added in the process of wet synthesis, in-situ carbonization is difficult due to a less high reaction temperature; and since the carbon source is water-soluble, it can be washed away in a subsequent washing process. 2. Metal ions doped can only be diffused into the material by means of the subsequent sintering process, and the reaction conditions in the hydrothermal synthesis stage are insufficient to allow the metal ions to enter the material. Moreover, although sand milling can further reduce the particle size of the hydrothermally synthesized material, the reduction of particle size will also lead to agglomeration. As a result, the material is agglomerated and grown in the subsequent sintering process to form molten large particles, which is not conducive to the improvement of rate performance.

The present inventors find unexpectedly that by the synergism of a dispersant, a grain growth inhibitor and sand milling, particles of small particle size formed during the sand milling process are ensured not to be susceptible to agglomeration, and the agglomerative growth in the subsequent sintering process is prevented, to avoid the formation of molten large particles. Moreover, bulk phase doping of the grain growth inhibitor improves the electron conductivity and ion conductivity, which is beneficial to the improvement of the rate performance. Furthermore, a carbon source is added in the sand milling process. Because the carbon source is water-soluble, the mixing and coating at a molecular level can be realized.

In some embodiments of the present disclosure, the lithium salt, phosphoric acid and iron salt are used in such an amount that the molar ratio of lithium, phosphorus and iron is 2.8-3.2:1:1.

In some embodiments of the present disclosure, on a dry basis of the second slurry, the organic carbon source is used in an amount of 8 wt%-16 wt%; the dispersant is used in an amount of 0.5 wt%-5 wt%; and the grain growth inhibitor is used in an amount of 0.1 wt%-6 wt%. In some other embodiments of the present disclosure, on a dry basis of the second slurry, the grain growth inhibitor is used in an amount of 0.3 wt%-5 wt%.

In some embodiments of the present disclosure, on a dry basis of the third slurry, the lithium supplement is used in an amount of 0.2 wt%-5.5 wt%. In some other embodiments of the present disclosure, on a dry basis of the third slurry, the lithium supplement is used in an amount of 0.5 wt%-5 wt%.

In the present disclosure, "on a dry basis of the second slurry" means to calculate based on the weight of the powder in the second slurry, and "on a dry basis of the third slurry" means to calculate based on the weight of the powder in the third slurry. The weight of the powder in the second slurry is calculated by multiplying the weight of the second slurry and the solid content of the second slurry. The weight of the powder in the third slurry is calculated by multiplying the weight of the third slurry and the solid content of the third slurry. The solid contents of the second slurry and the third slurry can be determined by a moisture meter at 160°C.

In some embodiments of the present disclosure, in Step (1), the lithium salt is a soluble lithium salt. For example, the lithium salt may be at least one selected from lithium chloride, lithium sulfate, lithium hydroxide and lithium nitrate.

In some embodiments of the present disclosure, in Step (1), the iron salt may be at least one selected from ferrous sulfate, ferrous chloride, ferrous nitrate and ferrous oxalate.

In some embodiments of the present disclosure, in Step (3), the organic carbon source may be at least one selected from sucrose, water-soluble phenolic resin, glucose, polyethylene glycol 6000 (PEG6000), hydroxymethyl cellulose, polyacrylamide ((C₃H₅NO)ₙ, having a weight average molecular weight of 5,000,000 -12,000,000 g/mol), starch and polyvinyl alcohol (having a weight average molecular weight of 200,000-700,000 g/mol).

In some embodiments of the present disclosure, the dispersant is at least one selected from sodium dodecyl sulfonate, polyethylene glycol 200 (PEG200), polyethylene glycol 400 (PEG400), sodium dodecyl sulfate, methyl amyl alcohol, sodium tripolyphosphate, sodium hexametaphosphate and sodium pyrophosphate. A dispersant is added in the sand milling process, to effectively inhibit the secondary agglomeration of small particles, which facilitates the improvement of the low-temperature and rate performance of the lithium iron phosphate positive electrode material.

In some embodiments of the present disclosure, the grain growth inhibitor is at least one selected from magnesium chloride, magnesium nitrate, aluminum nitrate, zirconium nitrate, zirconia, tetraethyl titanate, ethyl titanate, cobalt acetate, cobalt nitrate, vanadium pentoxide, ammonium metavanadate, manganese nitrate, manganese chloride, manganese sulfate, niobium pentachloride, tungsten disulfide, tin chloride, tin oxide, molybdenum sulfide and molybdenum oxide. In some other embodiments of the present disclosure, the grain growth inhibitor has a concentration of 0.3 wt%-5 wt%. The grain growth inhibitor added during the sand milling process has a "rolling" effect in the subsequent sintering process, to suppress the growth of particles, and provides metal ions entering the lattice of lithium iron phosphate, thus improving the electronic and ionic conductivity of the lithium iron phosphate positive electrode material. This reduces the low-temperature , improves and rate performance of the lithium iron phosphate positive electrode material.

In some embodiments of the present disclosure, the lithium supplement is at least one selected from lithium dihydrogen phosphate, lithium hydrogen phosphate and lithium phosphate. In the method for preparing a lithium iron phosphate positive electrode material, the impurity phases in the lithium iron phosphate positive electrode material and the magnetic material content can be reduced by adding the lithium supplement. The principle is that the sand milling process can re-expose the interior of the hydrothermally synthesized lithium iron phosphate material, and in the presence of the lithium supplement, the iron impurity phase inside the material can be further converted into the lithium iron phosphate material after the subsequent sintering process, effectively reducing the impurity phases and the magnetic material content contained in the material. This reduces the self-discharge performance, and improves the high-temperature storage performance and the cycle performance of the lithium iron phosphate positive electrode material.

In some embodiments of the present disclosure, in Step (1), the solvent is water. In some other embodiments of the present disclosure, in the step of a lithium, phosphoric acid and an iron salt are uniformly mixed under an inert atmosphere, the inert atmosphere useful in the present disclosure includes, but is not limited to, nitrogen or argon.

In some embodiments of the present disclosure, the hydrothermal reaction conditions are not particularly limited, and can be made reference to the conventional process conditions in the art. For example, the hydrothermal reaction conditions include a temperature of 130 °C-200°C, and a reaction time of 2 hrs-8 hrs.

In some embodiments of the present disclosure, the first slurry is a lithium iron phosphate slurry containing a reaction mother liquor obtained after hydrothermal reaction. In some other embodiments of the present disclosure, the pH of the first slurry is 5.5-7.

In some embodiments of the present disclosure, in Step (2), the washing includes specifically the reaction mother liquor is removed in the first slurry to obtain a centrifuged product, and then the centrifuged product is washed with a dilute aqueous salt solution.

The dilute aqueous salt solution is at least one selected from an aqueous solution of lithium chloride, lithium nitrate, lithium dihydrogen phosphate, lithium hydrogen phosphate or ammonium dihydrogen phosphate. In some other embodiments of the present disclosure, the dilute aqueous salt solution has a concentration of 0.01-2 wt%. The washing can be one step of washing or multiple steps of washing.

In some embodiments of the present disclosure, in Step (3), the sand milling can reduce the particle size of primary particles of the lithium iron phosphate positive electrode material, facilitating the improvement of the low-temperature and rate performances. To further improve the low-temperature and rate performances of the lithium iron phosphate positive electrode material, in some other embodiments of the present disclosure, the sand milling conditions include a linear speed of 5 m/s -15 m/s, and a time of 0.5 hrs-12 hrs.

In some embodiments of the present disclosure, by controlling the linear speed and time of sand milling, the particle size of primary particles of the lithium iron phosphate positive electrode material is controlled; by adding the dispersant, lithium iron phosphate particles of small size are presented from secondary agglomeration; and by adding the grain growth inhibitor, the growth and adhesive agglomeration of particles can be suppressed in the subsequent sintering process.

In some embodiments of the present disclosure, the inert atmosphere is nitrogen or helium atmosphere.

In some embodiments of the present disclosure, in Step (4), the spray drying is to evaporate the water in the third slurry by flash evaporation, so as to obtain secondary spherical particles assembled from the primary particles.

In some embodiments of the present disclosure, the spray drying conditions are not particularly limited. For example, the spray drying conditions include a solid content of 30 wt%-50 wt%, a temperature of 90 °C-105°C, and a time of 5 hrs-12 hrs.

In some embodiments of the present disclosure, the sintering conditions are not particularly limited, and can be made reference to the conventional process conditions in the art. For example, the sintering conditions includes a temperature of 650°C-760°C, and a time of 5 hrs-10 hrs. In some other embodiments of the present disclosure, the sintering is carried out under an inert atmosphere, and the inert atmosphere useful in the present disclosure includes, but is not limited to, nitrogen or argon.

In some embodiments of the present disclosure, the sintered product is secondary spherical particles assembled from the primary particles; and the jet milling is to break up the secondary spherical particles of the sintered product, to obtain dispersed primary particles of lithium iron phosphate positive electrode material.

In a third aspect, the present disclosure provides a lithium iron phosphate positive electrode material prepared by the method as described above. The lithium iron phosphate positive electrode material has an expression formula of LiFe₁₋ₓMₓPO₄/C, in which, 0<x≤0.05; and M is at least one element selected from Mg, Al, Zr, Ti, Co, V, Mn, W, Sn, Nb and Mo. The lithium iron phosphate positive electrode material has a particle size distribution meeting (D90-D10) / D50=1-2.17. The magnetic material content in the lithium iron phosphate positive electrode material is 850 ppm- 900 ppm (w/w).

In some embodiments of the present disclosure, the lithium iron phosphate positive electrode material has a particle size distribution meeting (D90-D10) / D50=1-1.55; and the magnetic material content in the lithium iron phosphate positive electrode material is 850 ppm-885 ppm (w/w).

In some embodiments of the present disclosure, based on the total weight of the lithium iron phosphate positive electrode material, the carbon content in the lithium iron phosphate positive electrode material is 1 wt%-3.5 wt%. In some other embodiments of the present disclosure, based on the total weight of the lithium iron phosphate positive electrode material, the carbon content in the lithium iron phosphate positive electrode material is 1.4 wt%-3.2 wt%.

In some embodiments of the present disclosure, M is at least one element selected from Ti, V and Nb.

In a fourth aspect, the present disclosure provides a lithium ion battery, containing the lithium iron phosphate positive electrode material as described above. The lithium iron phosphate positive electrode material according to the present disclosure shows excellent low-temperature performance, rate performance, high-temperature performance and cycle performance in lithium ion batteries.

In some embodiments of the present disclosure, the lithium iron phosphate positive electrode material has a low-temperature capacity retention rate of 65%-80% at -20°C and 1C. In some other embodiments of the present disclosure, the lithium iron phosphate positive electrode material has a low-temperature capacity retention rate of 70%-80% at -20°C and 1C. In some other embodiments of the present disclosure, the lithium iron phosphate positive electrode material has a low-temperature capacity retention rate of 70%-75% at -20°C and 1C.

In some embodiments of the present disclosure, the lithium iron phosphate positive electrode material has a discharge capacity retention rate of 75%-86% at 15C. In some other embodiments of the present disclosure, the lithium iron phosphate positive electrode material has a discharge capacity retention rate of 78%-86% at 15C. In some other embodiments of the present disclosure, the lithium iron phosphate positive electrode material has a discharge capacity retention rate of 81%-84% at 15C.

In some embodiments of the present disclosure, the lithium iron phosphate positive electrode material has a high-temperature capacity residual rate of 90%-99% after storage at 60°C for 7 days. In some other embodiments of the present disclosure, the lithium iron phosphate positive electrode material has a high-temperature capacity residual rate of 92%-99% after storage at 60°C for 7 days. In some other embodiments of the present disclosure, the lithium iron phosphate positive electrode material has a high-temperature capacity residual rate of 95%-98.5% after storage at 60°C for 7 days. In some embodiments of the present disclosure, the lithium iron phosphate positive electrode material has a high-temperature capacity recovery rate of 96.5%-102% after storage at 60°C for 7 days. In some other embodiments of the present disclosure, the lithium iron phosphate positive electrode material has a high-temperature capacity recovery rate of 99.5%-102% after storage at 60°C for 7 days. In some other embodiments of the present disclosure, the lithium iron phosphate positive electrode material has a high-temperature capacity recovery rate of 100%-101% after storage at 60°C for 7 days.

In some embodiments of the present disclosure, the lithium iron phosphate positive electrode material has a cycling capacity retention rate of 95.5% or higher after 500 cycles at 1C. In some other embodiments of the present disclosure, the lithium iron phosphate positive electrode material has a cycling capacity retention rate of 96% or higher after 500 cycles at 1C. In some other embodiments of the present disclosure, the lithium iron phosphate positive electrode material has a cycling capacity retention rate of 96.8%-97.5% after 500 cycles at 1C.

Hereinafter, the present application will be described in detail by way of examples.

In the following examples and comparative examples, the raw materials used are all commercially available products, unless otherwise specifically indicated.

The room temperature in present disclosure is 25±2°C unless otherwise specifically indicated.

In the following examples and comparative examples, relevant parameters are obtained by the following test methods:
(1) Morphology test by SEM: The morphology was tested by S-4800 model scanning electron microscope from HITACHI.
(2) Particle size distribution: Statistical count was performed by Smileview software in an SEM image at a magnification of 100k taken under S-4800 model scanning electron microscope from HITACHI. The minor-axis dimensions of all particles were measured, the obtained data was imported into and analyzed by mintab software, to obtain the D10, D50 and D90 values, and then the particle size distribution was calculated according to their respective values.
(3) Magnetic material content: The JSII-G1 magnetic material analyzer was used for test. Test conditions: 10 g of a sample was placed in a measuring cylinder for direct measurement.
(4) XPS spectrum: It was obtained by the Escalab 250Xi X-ray photoelectron spectrometer with Thermo Avantage V5.926 software purchased from Thermo Scientific Company. The test conditions: area of analysis: a circle with a diameter of about 800 µm, information depth: about 10 nm; lower limit of detection of atomic number percentage: 0.1%; test environment: temperature 23.6°C, relative humidity 50%, and vacuum level 5.0 x 10⁻⁸ Torr; voltage 15 kV, current 23 mA, and power 350W; and X-ray scanning angle 45.0°.
(5) Electrochemical performance test:

In the examples and comparative examples, the electrochemical performances of the lithium iron phosphate positive electrode material were tested by using a 2025 model button cell.

The 2025 model button cell was prepared as follows:
Preparation of electrode sheet: The lithium iron phosphate positive electrode material, acetylene black and polyvinylidene fluoride (PVDF) at a weight ratio of 100: 1.5:2.5 were fully mixed with an appropriate amount of N-methylpyrrolidone (NMP), to form an uniform positive electrode slurry. The positive electrode slurry was coated on an aluminum foil and dried at 100°C for 12 hrs, to form a positive electrode sheet with a diameter of 14 mm. The load of the lithium iron phosphate positive electrode material was 5 mg/cm²-10 mg/cm².
Assembly of battery: In a glove box filled with argon and having a water content and oxygen content of less than 5 ppm, the positive electrode sheet, a separator, a negative electrode sheet and an electrolyte solution were assembled into a 2025 model button cell, and allowed to stand for 6 hrs. The negative electrode sheet was a metal lithium sheet with a diameter of 17 mm and a thickness of 1 mm. The separator was a porous polyethylene film (Celgard 2325) with a thickness of 25 µm. The electrolyte solution was a mixed solution of 1 mol/L LiPF₆, in ethylene carbonate (EC) and diethyl carbonate (DEC) of equal volume.

### Electrochemical performance test:

In the examples and comparative examples, the electrochemical performance of the 2025 model button cell was tested by a battery test system from Shenzhen Neware Technology Limited.

Low-temperature capacity retention rate: At room temperature, the battery was constant-current charged to 3.8V at 0.1C, and then constant-current discharged to 2.5V at 0.1C. Then, the battery was constant-current charged to 3.8V at 0.1C, then constant-current discharged to 2.5V at 0.1C, and then constant-current charged to 3.8V at 0.5C, to obtain the specific charge capacity of the battery at room temperature and 0.5C. The battery was then placed in a freezer at - 20°C, and constant-current discharged to 2.0 V at 1C, to obtain the specific discharge capacity of the battery at -20°C and 1C. The ratio of the specific discharge capacity of the battery at -20°C and 1C to the specific charge capacity of the battery at room temperature and 0.5C is the low-temperature capacity retention rate of the battery.

Discharge capacity retention rate: The battery was charged to 3.8V at a rate of 0.2C and then to a cut-off current of 0.02C, and then CC discharged to 2.5V at a rate of 15C. The specific discharge capacity at 15C to the specific discharge capacity at 0.2C is the discharge capacity retention rate at 15C.

High-temperature capacity residual rate and high-temperature capacity recovery rate: The battery was fully charged at 0.1C, and then stored for 7 days in an oven at 60°C. The battery was removed, discharged to 2.5V at 0.1C, then charged to 3.8V at 0.1C, and then discharged to 2.5V. The ratio of the initial specific discharge capacity of the battery discharged to 2.5V at 0.1C after high-temperature storage to the specific discharge capacity before storage is the high-temperature capacity residual rate. The ratio of the specific discharge capacity after charging to 3.8V at 0.1C and then discharging to 2.5V to the specific discharge capacity before storage is the high-temperature capacity recovery rate of the battery.

Cycling capacity retention rate: At room temperature, the battery was subject to 500 cycles of charge and discharge at 1C. The ratio of the 500th specific discharge capacity to the 1st specific discharge capacity is the cycling capacity retention rate.

### Example 1

(1) Under nitrogen atmosphere, lithium hydroxide, phosphoric acid and ferrous chloride of stoichiometric ratio (the molar ratio of the lithium element, phosphorus element and iron element was 3:1:1) were added to deionized water and stirred until uniform to obtain a first mixture. The first mixture was transferred to a high-pressure reactor, and reacted at 160°C for 5 hrs, to obtain a first slurry.
(2) The first slurry was centrifuged, and separated to remove the reaction mother liquor. A centrifuged product was obtained. The centrifuged product was then washed with a 0.05 wt% lithium chloride solution, and the process was repeated once, to obtain a second slurry.
(3) Under nitrogen atmosphere, on a dry basis of the second slurry (based on the weight of the powder in the second slurry), 11 wt% of glucose, 2.5 wt% of niobium pentachloride and 2 wt% of PEG200 were added to the second slurry, and sand milled for 5 hrs at a linear speed of 10 m/s, to obtain a third slurry.
(4) On a dry basis of the third slurry (based on the weight of the powder in the third slurry), 1.32 wt% of lithium dihydrogen phosphate was added to the third slurry and mixed uniformly, to obtain a second mixture. The second mixture was spray dried, to obtain a precursor.
(5) The precursor was sintered for 8 hrs under nitrogen atmosphere at 720°C, and the sintered product was jet milled, to obtain the lithium iron phosphate positive electrode material LiFe_{0.99}Nb_{0.01}PO₄/C.

### Example 2

(1) Under nitrogen atmosphere, lithium hydroxide, phosphoric acid and ferrous sulfate of stoichiometric ratio (the molar ratio of the lithium element, phosphorus element and iron element was 3:1:1) were added to deionized water and stirred until uniform to obtain a first mixture. The first mixture was transferred to a high-pressure reactor, and reacted at 160°C for 5 hrs, to obtain a first slurry.
(2) The first slurry was centrifuged, and separated to remove the reaction mother liquor. A centrifuged product was obtained. The centrifuged product was then washed with a 0.05 wt% lithium dihydrogen phosphate solution, and the process was repeated once, to obtain a second slurry.
(3) Under nitrogen atmosphere, on a dry basis of the second slurry (based on the weight of the powder in the second slurry), 11 wt% of glucose, 1.5 wt% of vanadium pentoxide and 2 wt% of PEG400 were added to the second slurry, and sand milled for 5 hrs at a linear speed of 10 m/s, to obtain a third slurry.
(4) On a dry basis of the third slurry (based on the weight of the powder in the third slurry), 2.26 wt% of lithium dihydrogen phosphate was added to the third slurry and mixed uniformly, to obtain a second mixture. The second mixture was spray dried, to obtain a precursor.
(5) The precursor was sintered for 8 hrs under nitrogen atmosphere at 720°C, and the sintered product was jet milled, to obtain the lithium iron phosphate positive electrode material LiFe_{0.975}V_{0.025}PO₄/C.

### Example 3

(1) Under nitrogen atmosphere, lithium hydroxide, phosphoric acid and ferrous sulfate of stoichiometric ratio (the molar ratio of the lithium element, phosphorus element and iron element was 3:1:1) were added to deionized water and stirred until uniform to obtain a first mixture. The first mixture was transferred to a high-pressure reactor, and reacted at 160°C for 5 hrs, to obtain a first slurry.
(2) The first slurry was centrifuged, and separated to remove the reaction mother liquor. A centrifuged product was obtained. The centrifuged product was then washed with a 0.05 wt% lithium dihydrogen phosphate solution, and the process was repeated once, to obtain a second slurry.
(3) Under nitrogen atmosphere, on a dry basis of the second slurry (based on the weight of the powder in the second slurry), 11 wt% of glucose, 2.5 wt% of tetrabutyl titanate and 2 wt% of PEG200 were added to the second slurry, and sand milled for 5 hrs at a linear speed of 10 m/s, to obtain a third slurry.
(4) On a dry basis of the third slurry (based on the weight of the powder in the third slurry), 1.69 wt% of lithium dihydrogen phosphate was added to the third slurry and mixed uniformly, to obtain a second mixture. The second mixture was spray dried, to obtain a precursor.
(5) The precursor was sintered for 8 hrs under nitrogen atmosphere at 720°C, and the sintered product was jet milled, to obtain the lithium iron phosphate positive electrode material LiFe_{0.99}Ti_{0.01}PO₄/C.

### Example 4

A lithium iron phosphate positive electrode material was prepared following the method in Example 1, except that niobium pentachloride in Step (3) was replaced by manganese chloride of equal molar amount. The lithium iron phosphate positive electrode material LiFe_{0.99}Mn_{0.01}PO₄/C was obtained.

### Example 5

A lithium iron phosphate positive electrode material was prepared following the method in Example 1, except that on a dry basis of the second slurry, the amount of PEG200 (dispersant) was 0.4 wt%. The lithium iron phosphate positive electrode material LiFe_{0.99}Nb_{0.01}PO₄/C was obtained.

### Example 6

A lithium iron phosphate positive electrode material was prepared following the method in Example 2, except that on a dry basis of the second slurry, the amount of vanadium pentoxide (grain growth inhibitor) was 0.25 wt%. The lithium iron phosphate positive electrode material LiFe_{0.996}V_{0.004}PO₄/C was obtained.

### Comparative Example 1

A lithium iron phosphate positive electrode material was prepared following the method in Example 1, except that dispersant and grain growth inhibitor were not added in Step (3). The lithium iron phosphate positive electrode material LiFePO₄/C was obtained.

### Comparative Example 2

A lithium iron phosphate positive electrode material was prepared following the method in Example 1, except that dispersant and grain growth inhibitor were not added, and sand milling was not performed in Step (3). The lithium iron phosphate positive electrode material LiFePO₄/C was obtained.

### Comparative Example 3

A lithium iron phosphate positive electrode material was prepared following the method in Example 1, except that sand milling was not performed in Step (3). The lithium iron phosphate positive electrode material LiFe_{0.99}Nb_{0.01}PO₄/C was obtained.

### Comparative Embodiment 4

A lithium iron phosphate positive electrode material was prepared following the method in Example 1, except that lithium supplement was not added in Step (4). The lithium iron phosphate positive electrode material LiFe_{0.99}Nb_{0.01}PO₄/C was obtained.

### Test Examples

### (1) Morphology test

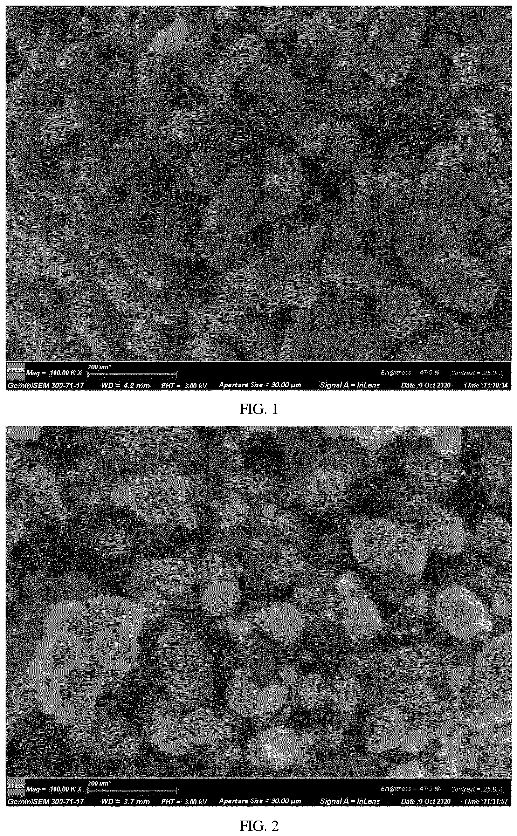

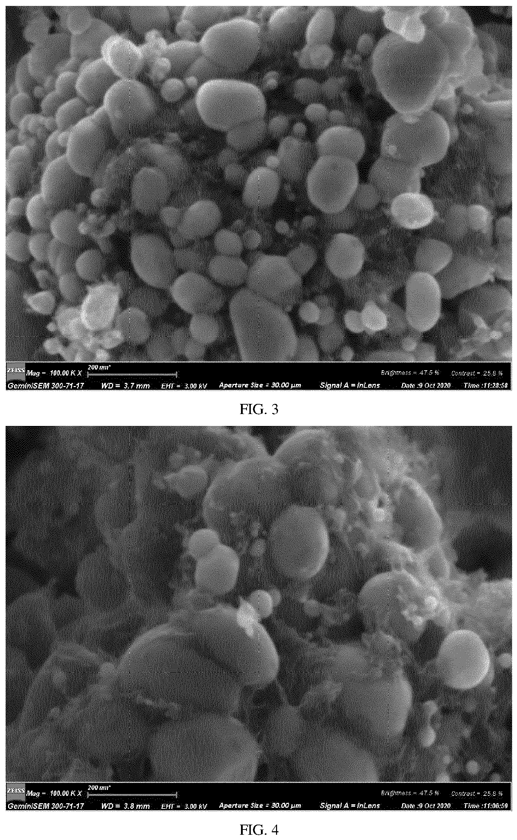

The lithium iron phosphate positive electrode materials prepared in the above examples and comparative examples were tested by scanning electron microscopy in the present disclosure. SEM images of the lithium iron phosphate positive electrode materials prepared in Examples 1-3 and Comparative Example 1 are schematically shown. The results are shown in FIGs. 1- 4. It can be seen from FIGs. 1-4 that the lithium iron phosphate material of the present disclosure has small particle size, and uniform particle size distribution.

### (2) Physical property test

The particle size distribution of and magnetic material content in the lithium iron phosphate positive electrode materials prepared in the above examples and comparative examples were tested in the present disclosure. The specific test results are shown in Table 1.

**Table 1**

| No. | D10 | D50 | D90 | (D90-D10)/D50 | Magnetic material/ppm (w/w) |
|---|---|---|---|---|---|
| Example 1 | 34 | 57 | 104 | 1.23 | 885 |
| Example 2 | 23 | 49 | 98 | 1.53 | 850 |
| Example 3 | 42 | 65.2 | 110 | 1.04 | 865 |
| Example 4 | 38 | 58 | 137 | 1.71 | 900 |
| Example 5 | 35 | 61 | 152 | 1.92 | 890 |
| Example 6 | 36 | 62 | 135 | 1.60 | 888 |
| Comparative Example 1 | 15 | 108 | 350 | 3.10 | 1165 |
| Comparative Example 2 | 35 | 98 | 400 | 3.72 | 2950 |
| Comparative Example 3 | 85 | 115 | 225 | 1.21 | 1205 |
| Comparative Example 4 | 34 | 56 | 105 | 1.27 | 2498 |

As can be seen from the results in Table 1, by combining a dispersant, a grain growth inhibitor, a lithium supplement, and sand milling, a lithium iron phosphate positive electrode material with small particle size, good dispersity, narrow particle size distribution and low magnetic material content can be obtained through the method for preparing a lithium iron phosphate positive electrode material according to the present invention.

### (3) Electrochemical performance test

The electrochemical performances of the lithium iron phosphate positive electrode materials prepared in the above examples and comparative examples were tested in the present disclosure, including the low-temperature capacity retention rate at -20°C and 1C, the discharge capacity retention rate at a rate of 15C, the high-temperature capacity residual rate and high-temperature capacity recovery rate after storage at 60°C for 7 days, and the cycling capacity retention rate after 500 cycles at a rate of 1C. The specific test results are shown in Table 2.

**Table 2**

| No. | Low-temperature capacity retention rate/-20°C, 1C | Discharge capacity retention rate/15C | High-temperature capacity residual rate/60°C, 7 days | High-temperature capacity recovery rate/60°C, 7 days | Cycling capacity retention rate/1C, 500 cycles |
|---|---|---|---|---|---|
| Example 1 | 72% | 83% | 96% | 100.1% | 97.2% |
| Example 2 | 75% | 83.8% | 97.5% | 100.5% | 96.8% |
| Example 3 | 70% | 81.2% | 98.5% | 100.9% | 97.1% |
| Example 4 | 65% | 75% | 92% | 96.5% | 95.5% |
| Example 5 | 69% | 80.0% | 96% | 100.1% | 97.1% |
| Example 6 | 73% | 82.3% | 97.3% | 100.3% | 97.1% |
| Comparative Example 1 | 61% | 70% | 88.5% | 95.6% | 90% |
| Comparative Example 2 | 51% | 55% | 80.1% | 91.3% | 86% |
| Comparative Example 3 | 47% | 65% | 98.6% | 97.8% | 97.5% |
| Comparative Example 4 | 71% | 81.5% | 85.5% | 91.0% | 88.1% |

As can be seen from the results in Table 2, by combining a dispersant, a grain growth inhibitor, a lithium supplement, and sand milling, a lithium iron phosphate positive electrode material with good rate performance, low-temperature performance and high-temperature performance can be obtained through the method for preparing a lithium iron phosphate positive electrode material according to the present disclosure.

Embodiments of the present disclosure have been described above in conjunction with the drawings; however, the present disclosure is not limited thereto. The specific embodiments described above are merely illustrative, and not limiting. Various forms can be made by those of ordinary skill in the art with the teachings of the present disclosure, without departing from the spirit and scope of protection defined by claims of the present disclosure, which all fall within the scope of protection of the present disclosure.

## Claims

1. A lithium iron phosphate positive electrode material, having an expression formula of LiFe₁₋ₓMₓPO₄/C, in which, 0<x≤0.05; and M is at least one element selected from Mg, Al, Zr, Ti, Co, V, Mn, W, Sn, Nb and Mo,
wherein the lithium iron phosphate positive electrode material has a particle size distribution meeting (D90-D10) / D50=1-2.17; and a magnetic material content in the lithium iron phosphate positive electrode material is 850 ppm-900 ppm (w/w).

2. The lithium iron phosphate positive electrode material according to claim 1, wherein based on the total weight of the lithium iron phosphate positive electrode material, a carbon content in the lithium iron phosphate positive electrode material is 1 wt%-3.5 wt%.

3. The lithium iron phosphate positive electrode material according to claim 1 or 2, wherein based on the total weight of the lithium iron phosphate positive electrode material, the carbon content in the lithium iron phosphate positive electrode material is 1.4 wt%-3.2 wt%.

4. The lithium iron phosphate positive electrode material according to any one of claims 1 to 3, wherein the magnetic material content in the lithium iron phosphate positive electrode material is 850 ppm-885 ppm (w/w).

5. The lithium iron phosphate positive electrode material according to any one of claims 1 to 4, wherein M is at least one element selected from Ti, V and Nb.

6. The lithium iron phosphate positive electrode material according to any one of claims 1 to 5, wherein the lithium iron phosphate positive electrode material has a particle size distribution meeting (D90-D10) / D50=1-1.55.

7. A method for preparing a lithium iron phosphate positive electrode material, comprising:
(1) mixing a lithium salt, phosphoric acid, and an iron salt, and then performing hydrothermal reaction in the presence of a solvent under an inert atmosphere, to obtain a first slurry;
(2) washing the first slurry, to obtain a second slurry;
(3) adding an organic carbon source, a dispersant and a grain growth inhibitor to the second slurry, and sand milling under an inert atmosphere, to obtain a third slurry;
(4) mixing the third slurry with a lithium supplement, and spray drying, to obtain a precursor; and
(5) sintering the precursor, and jet milling the sintered product, to obtain the lithium iron phosphate positive electrode material.

8. The method according to claim 7, wherein the lithium salt, the phosphoric acid and the iron salt are used in such an amount that the molar ratio of the lithium element, phosphorus element and iron element is 2.8-3.2:1:1;
on a dry basis of the second slurry, the organic carbon source is used in amount of 8 wt%-16 wt%;
on a dry basis of the second slurry, the dispersant is used in amount of 0.5 wt%-5 wt%;
on a dry basis of the second slurry, the grain growth inhibitor is used in amount of 0.1 wt%-6 wt%; and
on a dry basis of the third slurry, the lithium supplement is used in amount of 0.2 wt%-5.5 wt%.

9. The method according to claim 7 or 8, wherein on a dry basis of the second slurry, the grain growth inhibitor is used in amount of 0.3 wt%-5 wt%.

10. The method according to any one of claims 7 to 9, wherein on a dry basis of the third slurry, the lithium supplement is used in amount of 0.5 wt%-5 wt%.

11. The method according to any one of claims 7 to 10, wherein the lithium salt is at least one selected from lithium chloride, lithium sulfate, lithium hydroxide, and lithium nitrate; and
the iron salt is at least one selected from ferrous sulfate, ferrous chloride, ferrous nitrate and ferrous oxalate.

12. The method according to any one of claims 7 to 11, wherein the organic carbon source is at least one selected from sucrose, water-soluble phenolic resin, glucose, polyethylene glycol 6000, hydroxymethyl cellulose, polyacrylamide, starch and polyvinyl alcohol, wherein the polyacrylamide has a weight average molecular weight of 5,000,000 -12,000,000 g/mol, and the polyvinyl alcohol has a weight average molecular weight of 200,000-700,000 g/mol;
the dispersant is at least one selected from sodium dodecyl sulfonate, polyethylene glycol 200, polyethylene glycol 400, sodium dodecyl sulfate, methyl amyl alcohol, sodium tripolyphosphate, sodium hexametaphosphate and sodium pyrophosphate; and
the grain growth inhibitor is at least one selected from magnesium chloride, magnesium nitrate, aluminum nitrate, zirconium nitrate, zirconia, tetraethyl titanate, ethyl titanate, cobalt acetate, cobalt nitrate, vanadium pentoxide, ammonium metavanadate, manganese nitrate, manganese chloride, manganese sulfate, niobium pentachloride, tungsten disulfide, tin chloride, tin oxide, molybdenum sulfide and molybdenum oxide.

13. The method according to any one of claims 7 to 12, wherein the lithium supplement is at least one selected from lithium dihydrogen phosphate, lithium hydrogen phosphate and lithium phosphate.

14. The method according to any one of claims 7 to 13, wherein in Step (1), the hydrothermal reaction conditions comprise a temperature of 130°C-200°C, and a reaction time of 2 hrs-8 hrs.

15. The method according to any one of claims 7 to 14, wherein in Step (2), the washing comprises specifically removing the reaction mother liquor in the first slurry, and then washing, with a dilute aqueous salt solution, the product from which the reaction mother liquor is removed, wherein the dilute aqueous salt solution is at least one selected from an aqueous solution of lithium chloride, lithium nitrate, lithium dihydrogen phosphate, lithium hydrogen phosphate and ammonium dihydrogen phosphate.

16. The method according to any one of claims 7 to 15, wherein the dilute aqueous salt solution has a concentration of 0.01 wt%-2 wt%.

17. The method according to any one of claims 7 to 16, wherein in Step (3), the sand milling conditions comprise a linear speed of 5 m/s-15 m/s, and a time of 0.5 hrs-12 hrs.

18. The method according to any one of claims 7 to 17, wherein in Step (4), the spray drying conditions comprises a solid content of 30 wt%-50 wt%, a temperature of 90 °C-105°C, and a time of 5-12 hrs; and
the sintering conditions comprise a temperature of 650 °C-760°C, and a time of 5 hrs-10 hrs.

19. A lithium iron phosphate positive electrode material prepared by the method according to any one of claims 7 to 18.

20. A lithium ion battery, comprising the lithium iron phosphate positive electrode material according to any one of claims 1 to 6 and claim 19.
